Europäisches Patentamt

European Patent Office

Office européen des brevets

(11) Publication number: **0 278 209**
**A1**

## (12) EUROPEAN PATENT APPLICATION

(21) Application number: 87850045.3

(22) Date of filing: 09.02.87

(51) Int. Cl.⁴: **B05B 1/00** , **B05B 1/14** , **B08B 5/02** , **F16L 55/02**

(43) Date of publication of application:
**17.08.88 Bulletin 88/33**

(84) Designated Contracting States:
**DE FR GB NL SE**

(71) Applicant: **Moss, Hans**
**Doktorsvägen 18**
**S-430 80 Hovas(SE)**

(72) Inventor: **Moss, Hans**
**Doktorsvägen 18**
**S-430 80 Hovas(SE)**

(74) Representative: **Roth, Ernst Adolf Michael et al**
**GÖTEBORGS PATENTBYRA AB Box 5005**
**S-402 21 Göteborg(SE)**

(54) **A blowing nozzle.**

(57) A blowing device with blowing nozzle for emitting a concentrated, aimed pressurized air jet and incorporating a feed channel (7) having at least one slot-formed exhaust passage (3), which determines the flow quantity through the blowing device. The purpose of the invention is to create a concentrated air flow, well adapted for cleaning, preferably in the component producing industry, having low noise generation at the object blown upon, within the mixing zone and also at the exhaust opening, at critical as well as particularly at sub-critical flow. This is obtained with the blowing device according to the invention in that the exhaust passage or passages (3) is/are constituted by a number of very thin, relative to their width elongated slots (4) located around a common slot center portion, that the ratio between the smallest slot length (L) and the biggest slot width (B) is bigger than 5, preferably bigger than 12, that the most narrow section of the exhaust passage/passages (3) is situated inside the end plane (2) of the nozzle, thus that the expansion zone for the pressurized gaseous fluid is situated outside the end plane (2) of the nozzle and that the extension of the slots (4) in the direction of flow is such that the dynamic pressure of the jet of air, at escape of pressurized gas at critical flow velocity, e.g. air of a feed pressure of 6 bar and the temperature 293° K, by adiabatic expansion, during its exit to the surroundings, is higher than the atmospheric pressure, preferably considerably higher.

**FIG 1**

# A BLOWING NOZZLE

## Technical field

The present invention refers to a blowing device with blowing nozzle for emitting a concentrated, aimed gaseous fluid, which is pressurized at high power density, and which can be a jet of air, and incorporating a feed channel connectable to a pressure source and having at least one slot-formed exhaust passage, which determines the flow quantity through the blowing device.

## Background of the invention

When air escapes from an outlet channel, e.g. a cylindrical tube, there is created, immediately downstream the so called contraction zone, a conical core jet converging in the direction of flow, and outside this core jet a diverging mixing zone, where the escaping gas by admixing with the surround atmospheric air looses a certain part of its velocity. Within the boundry layer area, known as the high turbulence area, i.e. within the outer layer of the jet and the mixing zone situated thereoutside, there occurs a high frequent noise generation.

It is known that dominant noise generation at an outlet opening takes place at the so called Stroulhal frequency, fs, which is determined by the ratio SN x u/d, wherein SN = the Stroulhal number, which at the gas flow here at hand with a Reynold number > 500 is equal to 0,2 (non-dimensional)

u = the exhaust velocity in m/s and
d = the cross sectional area of the outlet in m.

From the above it is evident that at the normally occuring exhaust velocities of about 300 m/s, dominant noise generation occurs at an outlet having a cross sectional dimension of 2 mm at about 30.000 Hz.

In view of the fact that noise generation has a broad band nature, strong noise however is generated also at half the fs and double the fs resp.

In order to ascertain that dominant exhaust noise, with regard to the human hearing, shall be subordinated to the noise generation within the mixing zone diverging downstream the outlet, it is required that the Stroulhal frequency regarding the outlet noise is displaced a further two octaves, i.e. to about 120.000 Hz.

In view of normally required exhaust areas, bigger than 6 mm², it thus is required at cylindrical outlet passages more than 31 spaced apart outlet passages. Both the number of passages and their small dimension make it difficult to realize such a nozzle.

Studies made have shown that well spaced apart outlet channels of small cross sectional dimension furthermore give reduced noise generation within the boundary layer, for the so called high turbulent area as well as within the mixing zone there outside. This probably depends upon the reduced size of each turbulence area.

It has furthermore been established that well spaced apart outlet channels allow that the mixing zone occuring downstreams the outlet reaches the object upon which the jet is directed at a considerablyreduced flow velocity. This has occured as a high contact ratio between surrounding atmospheric air and the plurality of flowing part flows cause a high degree of co-ejection. The flow looses in velocity but increases in mass. The blowing power rather increases than is reduced. The efficiency expressed in blowing power in relation to air consumption, can be increased following a high contact ratio.

Comprehensive tests, i.a. by so called sound intensity measurement, having shown that the most common noise sources; outlet noise, flow sound from the air jet flowing through the atmosphere and blowing in sound; all are depending of a high contact ratio between the total outlet circle and the sum of the outlet areas.

For a nozzle with cylindrical outlet passage(s) this contact ratio is equal to the number of holes multiplied with 4/p mm/mm² (pathe outlet diameter in mm); i.e. for a given outlet area noise reductions are obtained therein that the exhaust area is subdivided into a plurality of smaller outlet passages. As such a nozzle requires a big interspace between the different passages, it is impossible to set the contact ratio too high without impairing the power density and thereby the blowing function.

Earlier nozzles known as multi-channel nozzles, e.g. corresponding to Swedish patent application No 7910235-6, give such a high degree of dispersed flow that the nozzle is almost unuseful what concerns cleaning of smaller holes, grooves etcetera.

It is known that at every smaller cylindrical gas exhaust passage is generated noise of a monopole nature, i.e. the noise source at each outlet can be described in the most simple manner as a small pulsating semi-sphere. At equal spaces from the centre of the sphere, the pressure variations in all directions thus are in phase.

What regards flow and blowing in sounds these noise sources are known to have the nature of quadrupoles.

The sound effect of the monopole is proportional to a constant K1 multiplied with the area multiplied with the mach number, whereas the sound effect of the quadrupole is proportional to the same constant K1 multiplied with the area multiplied with the fifth power of the mach number.

To sum up, it applies that during the time a nozzle operates at a subcritical pressure condition i.e. the mach number is smaller than one, then the outlet noise alone is the only one dominating the noise conditions. Within certain important markets, i.a. the USA, there are requirements set up by the authorities for a maximum pressure source feeding pressure of 2,1 bars. As a high co-ejection creates counterpressure downstream of the outlet it applies that blowing nozzles in these markets operate with a sub-critical flow. Within most countries there are however such feeding pressures at hand that the escape from the nozzle is critical, i.e. the mach number is equal to one.

Nowadays it however is reasonable to consider that ever more countries will introduce accentuations regarding a maximum feeding pressure. Under such conditions the nozzle outlet should have the shape of a quadrupole noise source, in order to achieve a low noise level.

A further foundation for the developement of the present invention has been the knowledge of that the change from one or more point sound sources to one or more linear sound sources of correctly chosen dimensions give raise to a lower noise level in the near field area of the noise source. At a normal ear distance between the nozzle and an operator of about 0,5 m it has been established that noise reductions of up to 3dB(A) have been obtained when changing to a linear noise source, at a given Strouhal frequency.

## Purpose and most essential features of the invention

The purpose of the invention is to create an air flow concentrated by a high power density and thereby with a high dynamic pressure, which flow is well suited for cleaning in preferably component manufacturing industries, and has a low sound generation at the object to be blown upon, within the mixing zone and at the exhaust opening. This shall apply at critical as well as especially at sub-critical flow. The invention furthermore aims to obtain such noise reductions obtained with a maintained high blowing power and a high efficiency. This is achieved with the blowing device according to the invention in that the exhaust passage or passages is/are constituted by a number of very thin, relative to their width elongated slots located around a common slot center portion, that the ratio between the smallest slot length and the biggest slot width is bigger than 5, preferably bigger than 12, that the most narrow section of the exhaust passage/passages is situated inside the end plane of the nozzle, thus that the expansion zone for the pressurized gaseous fluid is situated outside the end plane of the nozzle and that the extension of the slots in the direction of flow is such that the dynamic pressure of the jet of air, at escape of pressurized gas at critical flow velocity, e.g. air of a feed pressure of 6 bar and the temperature 293° k, by adiabatic expansion, during its exit to the surroundings, is higher than the atmospheric pressure, preferably considerably higher.

The blowing device according to the invention, the functions of which have been tested, gives a considerably lower noise level as compared with the recognized silent so called multi channel nozzles. The noise dose reductions at typically occuring cleaning operations are e.g. 3-6 dB(A); i.e. the sum of noise effect has been reduced 2 - 4 times. The reduction has been achieved partly by lower sound generation and partly by reduced cleaning time due to a considerably improved blowing effect. The latter is achieved particularly at cleaning stations with mainly hole or groove cleaning. The noise reductions achieved are most pronounced at sub-critical exhaust.

A change to linear sound sources in the form of thin wide outlet slots furthermore presents machining advantages. It is e.g. possible to limit in a more simple manner certain cross sectional dimensions by injection moulding of plastic material or aluminum.

## Description of the drawings

Fig. 1 shows in perspective an exampel of a blowing device according to the invention.

Fig. 2 shows an end view of the blowing device according to Fig. 1 provided with acoustically shielding ridges.

Fig. 3 shows a longitudinal section along line III-III in Fig. 2.

Fig. 4 shows a longitudinal section of an alternative embodiment of the blowing device according to Fig. 3.

Fig. 5 shows in end view a blowing device according to the invention wherein the exhaust area is subdivided into a plurality of separate but cooperating exhaust passages.

Fig.s 6 and 7 show in end views further alternative embodiments of the exhaust passages.

## Description of the preferred embodiments

The most simple embodiment of a blowing device according to the invention comprises a body portion 1, and end plane 2 and an exhaust passage 3, which perpendicular to the direction of flow has a mainly star-shaped extension formed as thin elongated slots 4 with the slot width B and the slot length L. At the embodiments according to Fig.s 1-4 the slots 4 form a continuous exhaust passage.

The purpose of the invention however also can be achieved if the exhaust passages are subdivided into two or more spaced apart, thin, elongated channels 3, according to Fig.s 5-7, which downstream of the outlet cooperate to create a star-formed flow.

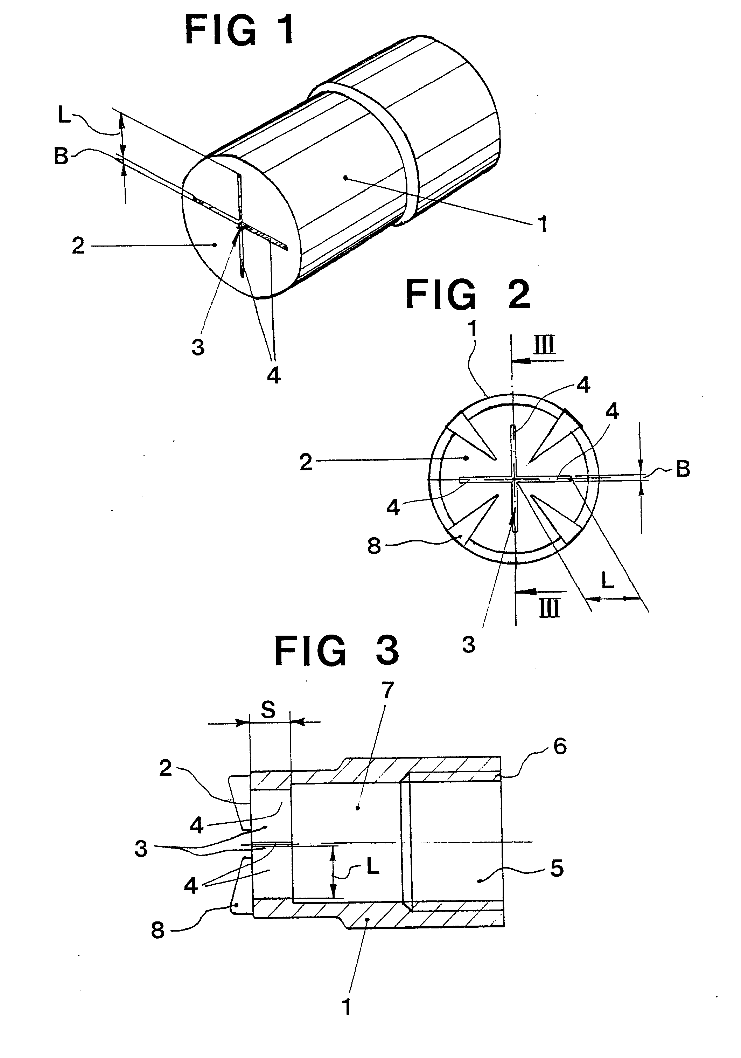

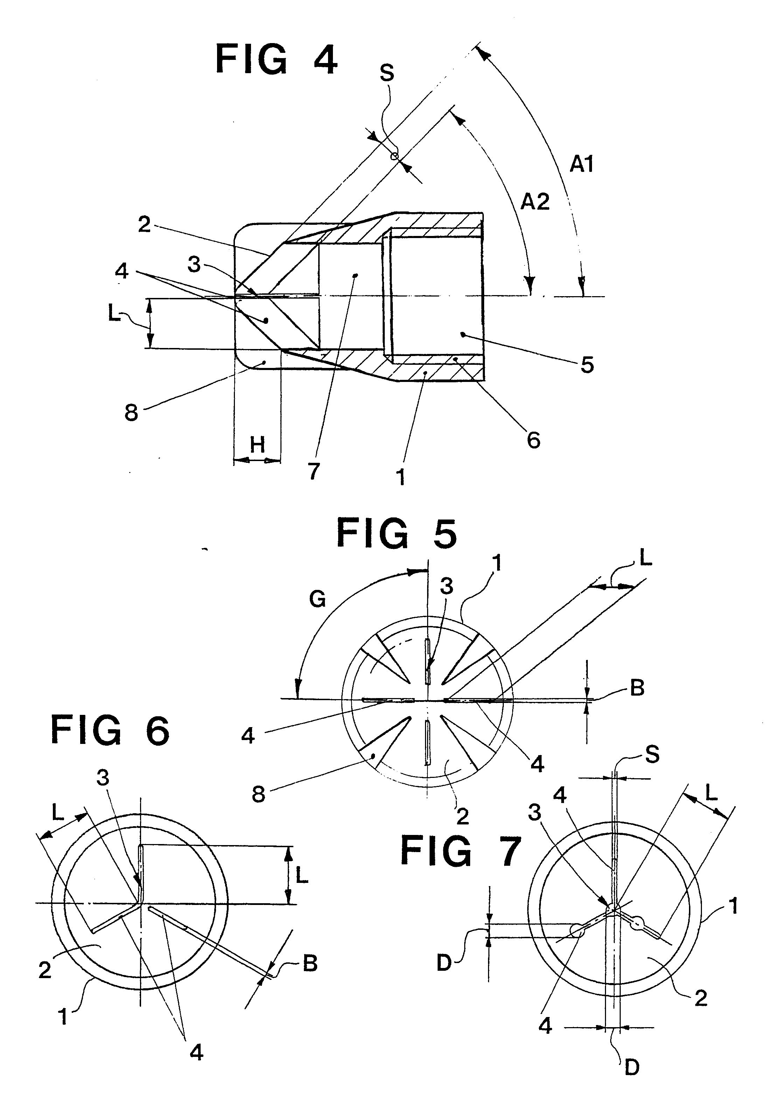

The body portion 1 is intended to be connected with its connection 5 to a pressure gas source, e.g. with aid of a threaded coupling 6. When applying a gas pressure the gas will flow via the feed channel 7 through the exhaust passage or passages 3, which open in openings in an end plane 2 being arranged mainly perpendicularly to the direction of flow, according to Figs 1 to 3, or alternatively in an angled end plane 2, Fig. 4.

In order to achieve the object of a low outlet noise the following requirements must be fulfilled; i.e. that the concentrated flow in a star-configuration is shaped to bring about an efficient communication with the atmospheric air present around the blowing device downstream of the expansion zone for the most narrow section within the exhaust passage/passages 3, whereby such a high co-ejection of said atmospheric air is obtained that the sum of counterpressure downstream of the expansion zone is considerably higher than the atmospheric pressure, whereby a critical exhaust does not occur until the feeding pressure within the feeding channel 7 is higher than 2,5 bars, preferably considerably higher. The ratio between the total circumference of the exhaust passage/passages 3 and its total through-flow area shall be bigger than 1 mm/mm², preferably considerably bigger. The average slot width B for the thin elongated slots 4 within the exhaust passage 3 ought to be smaller than 0,7 mm, preferably smaller than 0,4 mm.

The ratio between the smallest slot length L measured perpendicularly to the direction of flow and the biggest slot width B furthermore ought to be bigger than 5, preferably bigger than 12. This is based upon that tests have shown, that a change from a so called point noise source to a so called linear noise source occurs if the ratio between the slot length L and the slot width B is bigger than 5 or 6.

It has furthermore proven itself that if the ratio L/B is bigger than about 12, then there is at each separate slot 4 different pole numbers within the centre of the slot 4 and at at least one of its outer areas. At ratios e.g. bigger than 12 the phase difference for dominant sound generation frequencies is bigger than 45°. The noise reduction thereby has been established to be about 1.5 dB(A).

At correct geometric dimensions and at correct mutual locations of the different linear noise sources, these noise sources furthermore will cooperate to give a combined outlet noise, which has the nature of a so called quadrupole noise source. For the purpose of obtaining considerably increased phase times regarding the noise of linear noise nature generated at the outlet, a nozzle design according to Fig. 4 is preferable. If the angle A1 is e.g. 45° and the slot length L - perpendicularly to the direction of flow - 5 mm, it is obtained a phase difference of about 90° between the noise generation for the two outer edges of the slot. This concerns dominant frequencies of about 15.000 Hz. The phase difference between the noise generation within the central portion of the slot, which corresponds to half the slot length, and the noise generation at the two outer areas of the slot amounts for current frequencies to up to 45°.

In order to achive on one hand such sound interfering phase differences regarding the outlet noise and on the other hand to isolate in a more efficient manner the quadrupole properties of this noise, the angle A1 of the end plane 2 relative to the direction of flow should be smaller than 90° and the angle A1 should preferably be found in the interval 60° to about 10°.

In order to ascertain that the pressure drop is about uniform within the different slot passages 4, the passage through-flow length S in each slot passage area shall be substantially the same; i.e. the angle A2 should be substantially equal to the angle A1.

Tests made have shown that necessary dimensioning parameters regarding the desired part properties, high Strouhal number high co-ejection due to a high ratio between the total exhaust passages/passage 3 circumference and its total exhaust area; linear noise source; cooperation of linear noise sources to give quadrupole properties for what is known as outlet noise, can be combined to an acoustic factor of merits.

Due to the fact that exhaust passage/passages 3 together form an exhaust unit having substantially a star-shape, incorporating said thin, elongated slots 4, this acoustic factor of merits is determined by the product of the ratio between the smallest occuring slot length L of the exhaust passage or passages 3 and its average slot width 8 on one hand and the inverted value of the exhaust are As of the slot 4 multiplied by sine A1 on the other hand, whereby A1>10 degrees. The acoustic factor of merits thus can be written as L/B x 1/LxB x sine A1. The tests made have shown that it with a maintained blowing power, as compared to a cylindric outlet known as a tube outlet, is obtained a noise level reduction, which is proportional to the expression 3 + 10 times the tenth logarithm for the acoustic factor of merits, i.e. at an acoustic factor of merits of less than about 0,5 $mm^{-2}$ is achieved no noise reduction as compared to the tube outlet. At an acoustic factor of merits of about 1 $mm^{-2}$ the noise reduction compared to the tube outlet is about 3 dB(A) and at an acoustic factor of merits of 10 $mm^{-2}$ about 13 dB(A). Factors of merit bigger than 50 or 60n $mm^{-2}$ have proven to be difficult to realize.

For achieving the purposes of the present invention the acoustic factor of merits should be bigger than 1 $mm^{-2}$, preferably considerably bigger than 1 $mm^{-2}$. A blowing device according to the invention thus should have a noise radiation divided at least into half. This corresponds mainly to the reduction which must be present for man subjectively to perceive the noise level reduction.

In order to achieve the purpose of a concentrated flow, with reference to field tests, the circumference of the blowing nozzle, i.e. the exhaust unit should be smaller than 70 mm, preferably smaller than 40 mm, e.g. 30 mm, whereby the time for cleaning holes and grooves as compared to tube nozzles, can be maintained unchanged. The exhaust unit is defined as the area perpendicular to the direction of flow, which with the smallest possible circumference encircles all through-flow areas for the exhaust passage/passages 3.

In order to ascertain that the so called contraction zone is located within each exhaust passage 3, the ratio between the smallest passage through-flow length S and the slot width B should be bigger than 5, preferably substantially bigger, e.g. about 15.

An alternative, and also supplementing manner of improving i.a. the quadrupole nature preferably for high frequent outlet noise, is to achieve, by means of acoustic shields in the form of ridges 8 according to Figs 2 -5, significant differences in the travel path of the noise regarding the noise dispersion from each thin, wide outlet slot to the ear position of the operator.

Based on test results the space H between at least any part surface within each ridge 8 and the outlet unit within the end plane surface 2, as measured in the direction of the flow, should be bigger than 10 times the average slot width B, preferably bigger than 25 times, whereby related to wavelengths of frequencies over 15.000Hz, the so called effective barrier height, known from the acoustics, which here is substantially equal to the ridge height H, is bigger than 0,35 times the current wave-length, preferably considerably bigger than 0.35 times. Tests made with such ridges 8 furthermore have shown that the direction characteristics of the noise has been changed in a positive manner.

At a blowing device according to the invention as seen perpendicularly to the direction of flow according to Fig 2 and Figs 5 - 7 each outflow slot should have a longitudinal extension, which is substantially radial. The slot outlets furthermore should be well spaced apart. The partition angle G ought to be bigger than 40° preferably considerably bigger, e.g. 90°.

Tests made have shown that each slot 4 with limited noise level increasing effect can be given alternative shapes, such as exemplified in Fig. 7, under the pre-requisite that the diameter D is thereby limited. The diameter D should for instance be smaller than 6 times the slot width B, preferably smaller than 3 times.

The invention is not limited to the embodiments shown and described but can be varied in several manners within the scope of the claims.

**Claims**

1. A blowing device with blowing nozzle for emitting a concentrated, aimed gaseous fluid, which is pressurized at high power density, and which can be a jet of air, and incorporating a feed channel (7) connectable to a pressure source and having at least one slot-formed exhaust passage (13), which determines the flow quantity through the blowing device.
**characterized therein,**
that the exhaust passage or passages (3) is/are constituted by a number of very thin, relative to their width elongated slots (4) located around a common slot center portion, that the ratio between the smallest slot length (L) and the biggest slot width (B) is bigger than 5, preferably bigger than 12, that the most narrow section of the exhaust passage/passages (3) is situated inside the end plane (2) of the nozzle, thus that the expansion zone for the pressurized gaseous fluid is situated outside the end plane (2) of the nozzle and that the extension of the slots (4) in the direction of flow is such that the dynamic pressure of the jet of air, at escape of pressurized gas at critical flow velocity, e.g. air of a feed pressure of 6 bar and the temperature 293° K, by adiabatic expansion, during its exit to the surroundings, is higher than the atmospheric pressure, preferably considerably higher.

2. A blowing device as claimed in claim 1, **characterized therein,** that the slots (4) are arranged to cause together a concentrated escape of said gaseous fluid, formed in a star configuration or the like, and that the blowing nozzle (1) in connection to the exhaust passage or passages (3) resp. is designed as and/or provided with members, adapted to support co-ejection of surrounding atmospheric air immediately after the exit of the jet of fluid from the nozzle in the portions thereof situated between the jets of fluid formed by the slots.

3. A blowing device as claimed in claim 1 or 2, **characterized therein,** that the product of the ratio between the smallest appearing slot length (L) of the exhaust passages (3) and its average slot width (B) on one hand and the inverted value of the exhaust area (As) of the slots, multiplied with the sine value for the angle A1, is bigger than, and preferably considerably bigger than $1mm^{-2}$, whereby $120° > A1 > 10°$.

4. A blowing device as claimed in claim 1, 2 or 3, **characterized therein,** that the slot width (B) is smaller than 0,7 mm, preferably smaller than 0,4 mm.

5. A blowing device as claimed in one or more of the preceding claims, **characterized therein,** that the end plane angle (A1) is smaller than 60°.

6. A blowing device as claimed in one or more of the preceding claims, **characterized therein,** that the extension of the slots (4) in their through-flow length (S) is mainly constant.

7. A blowing device as claimed in one or more of the preceding claims, **characterized therein,** that all exhaust passages (As) open within an outflow unit, which with the smallest possible circumference encloses the mouth areas of all said exhaust passages, whereby said smallest possible circumference is smaller than 70 mm, and preferably smaller than 30 mm.

8. A blowing device as claimed in one or more of the preceding claims, **characterized therein,** that the ratio between the smallest passage through-flow length (S) and the biggest slot width (B) is bigger than 5, preferably bigger than 15.

9. A blowing device as claimed in one or more of the preceding claims, **characterized therein,** that the end plane (2) of the blowing nozzle (1) is provided with ridges (8), the ridge height (4) of which, relative to said end plane within the exhaust unit for at least any part surface is at least 10 times, and preferably 25 times bigger than the average slot width (B).

0 278 209

# FIG 1

# FIG 2

# FIG 3

0 278 209

# FIG 4

# FIG 5

# FIG 6

# FIG 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | WO-A-8 301 747 (MOSS)<br>* Whole document * | 1,6 | B 05 B 1/00<br>B 05 B 1/14<br>B 08 B 5/02<br>F 16 L 55/02 |
| | --- | | |
| A | WO-A-8 101 669 (FÖRENADE)<br>* Page 4, line 32 - page 7, line 9; figures 1,2 * | 1,9 | |
| | --- | | |
| A | US-A-4 109 750 (WIRT)<br>* Figure 8 * | 2 | |
| | ----- | | |

TECHNICAL FIELDS SEARCHED (Int. Cl.4)

B 05 B
B 08 B
F 01 N
F 16 L

The present search report has been drawn up for all claims

| Place of search | Date of completion of the search | Examiner |
|---|---|---|
| THE HAGUE | 08-10-1987 | JUGUET J.M. |